# EUROPEAN PATENT APPLICATION

(11) **EP 1 457 708 A2**
(43) Date of publication of application: **15.09.2004**
(21) Application number: 04005524.6
(22) Date of filing: 09.03.2004
(51) Int. Cl.: F16F 15/129

(54) **A torsional damper apparatus**

(30) Priority: 14.03.2003 JP 2003070694
(71) Applicant: Aisin Seiki Kabushiki Kaisha, Kariya-shi, Aichi-ken 448-8650 (JP)
(72) Inventor: Takashi, Yukihisa, Chita-gun Aichi-ken (JP); Fukaya, Nobuki, Takahama-shi Aichi-ken (JP); Kitada, Koji, Chiryu-shi Aichi-ken (JP)
(74) Representative: Kramer - Barske - Schmidtchen

(57) **Abstract**

A torsional damper apparatus (1) includes a clutch hub (10) having a hub portion and a flange portion (11) extending in a radially outward direction from the hub portion, a first side plate (20A) and a second side plate (20B) coaxially disposed on opposite sides of the clutch hub and relatively rotatable with the clutch hub and first (30A) and second (30B) thrust members retained between contact faces of the clutch hub and the first side plate, and contact faces of the clutch hub and the second side plate respectively. At least one of the first thrust member and the second thrust member includes a base portion (31) and a coating layer (32) faces the flange portion and including a metallic particle having a smaller hardness than the clutch hub and a thermosetting resin.

## Description

### FIELD 0F THE INVENTION

The present invention generally relates to a torsional damper apparatus used for a clutch disk of a vehicle and the like. More particularly, the present invention pertains to a torsional damper apparatus that can achieve a reduction of number of parts or production process.

### BACKGROUND 0F THE INVENTION

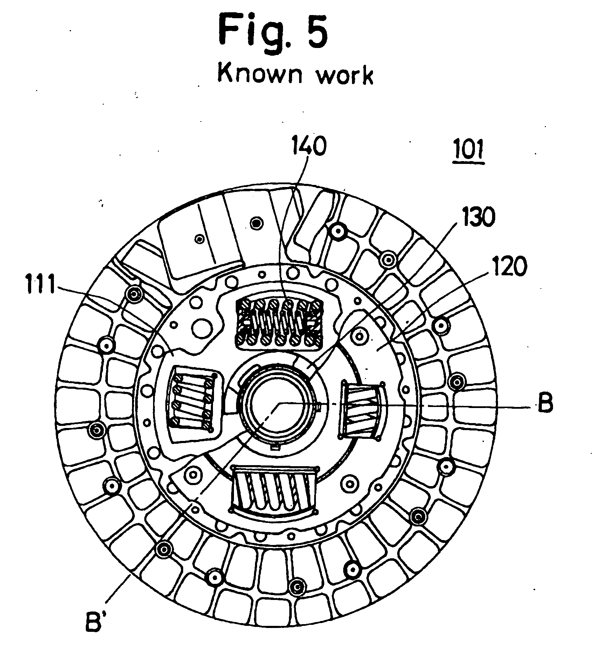

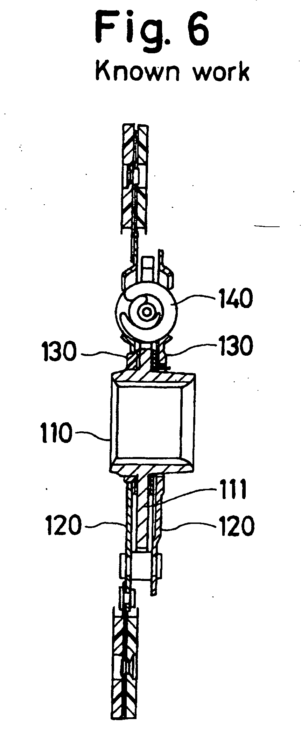

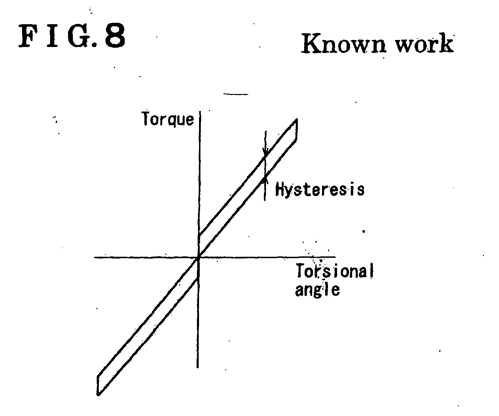

A clutch disk is generally equipped with a damper device in a rotating direction. Such a damper device is disclosed in Figs. 5, 6 and 7. The disclosed damper device of a clutch disk 101 is disposed between a clutch hub 110 and a side plate 120 and includes a coil spring 140 and a thrust member 130. The damper device performs a torque transmission via the coil spring 140 between the clutch hub 110 and the side plate 120. Torsional characteristics of the torque transmission have a hysteresis produced by the thrust member 130 ( as shown in Fig. 8).

The thrust member 130 is includes a base material 131 and a friction member 132. The friction member 132 is adhered to a face of the base material 131 which facing to a flange portion of the clutch hub 110 by a adhesive layer 133.

According to the known thrust member 130, however, adhesive layer 133 is required for holding the friction member 132 to the base material 131, thereby causing an increase of number of parts or production process. The cost is also increased.

Thus, a need exists for a torsional damper apparatus which can achieve a reduction of number of parts or the production process.

### SUMMARY OF THE INVENTION

According to an aspect of the present invention, a torsional damper apparatus includes a clutch hub having a hub portion and a flange portion extending in a radially outward direction from the hub portion, a first side plate and a second side plate coaxially disposed on opposite sides of the clutch hub and relatively rotatable with the clutch hub and first and second thrust members retained between contact faces of the clutch hub and the first side plate, and contact faces of the clutch hub and the second side plate respectively. At least one of the first thrust member and the second thrust member includes a base portion and a coating layer faces the flange portion and including a metallic particle having a smaller hardness than the clutch hub and a thermosetting resin.

According to the present invention mentioned above, the number of parts or the production process may be reduced with the more stabilized hysteresis than the known torsional damper apparatus.

### BRIEF DESCRIPTION OF THE DRAWING FIGURES

The foregoing and additional features and characteristics of the present invention will become more apparent from the following detailed description considered with reference to the accompanying drawing figures in which like reference numerals designate like elements.
Fig. 1 is a front view of a torsional damper apparatus according to a an embodiment of the present invention;
Fig. 2 is a cross-sectional view taken along a line A-A' of Fig. 1;
Fig. 3 is an enlarged cross-sectional view in a vicinity of a thrust member taken along a line A-A' of Fig. 1;
Fig. 4 is a graph showing a hysteresis change for the thrust member along with an operating time thereof;
Fig. 5 is a front view of a torsional damper apparatus according to a known work;
Fig. 6 is a cross-sectional view taken along a line B-B' of Fig. 5;
Fig. 7 is an enlarged sectional view in a vicinity of a thrust member taken along a line B-B' of Fig. 5; and
Fig. 8 is a graph showing torsional characteristics of a torsional damper apparatus.

### DETAILED DESCRIPTION OF THE INVENTION

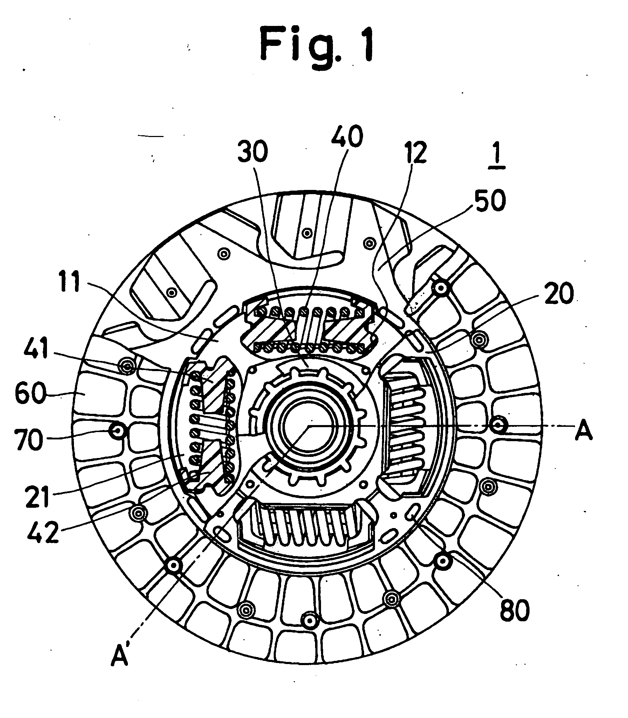

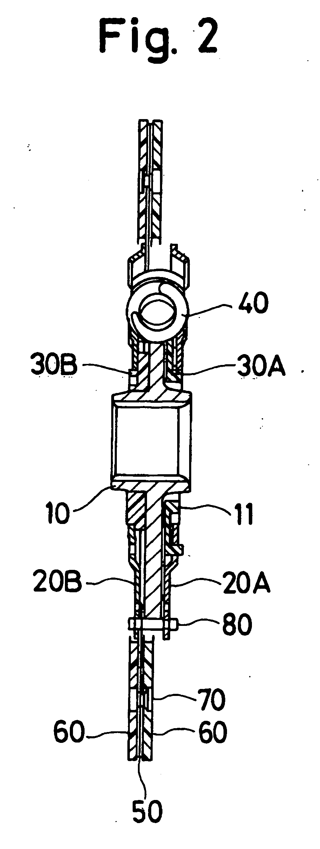

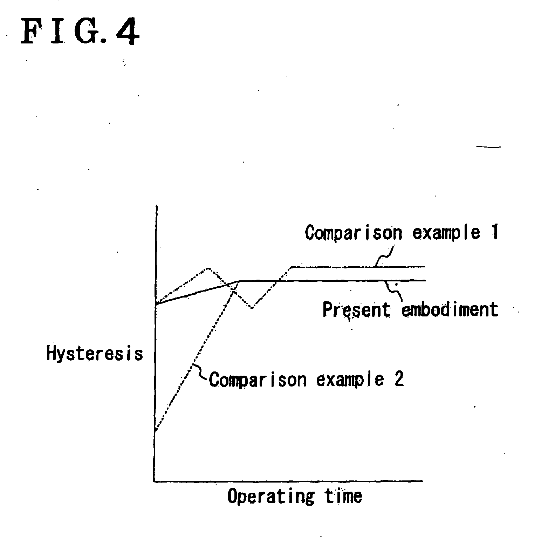

An embodiment of the present invention is explained referring to attached drawings. Fig. 1 is a front view showing a structure of a clutch disk (a torsional damper apparatus) 1 according to the present embodiment. Fig. 2 is a cross-sectional view taken along a line A-A' of Fig. 1. Fig. 4 is an enlarged cross-sectional view in a vicinity of a thrust member of the clutch disk 1 taken along a line A-A' of Fig. 1.

The clutch disk 1 includes a clutch hub 10, a side plate 20, a thrust member 30, a coil spring 40, and a cushion spring 50.

The clutch hub 10 includes a hub portion and a flange 11 extending in a radially outward direction from the hub portion as shown in Figs. 1 and 2. In Fig. 2, the flange 11 is formed as a unit with the hub portion of the clutch hub 10. However, the flange 11 and the hub portion may be separately formed so that a small spring can be disposed therebetween. Then, a small torsional vibration can be absorbed between the flange 11 and the hub portion. The clutch hub 10 also includes a notch 12 that opens in the radially outward direction of the flange 11. The notch 12 is constituted in such a manner that each outer circumferential side of spring seats 41 and 42 (See Fig. 1) is positioned radially outward relative to an outer circumferential side of the flange 11.

The side plate 20 is coaxially provided and relatively rotatable with the clutch hub 10. As shown in Fig. 2, the side plate 20 includes a first side plate 20A and a second side plate 20B disposed on opposite sides of the clutch hub 10 in an axial direction. The first side plate 20A and the second side plate 20B include window holes 21 for connecting the outer circumferential side of the coil spring 40. The first side plate 20A and the second side plate 20B are connected by a rivet pin 80 at the circumferential side thereof.

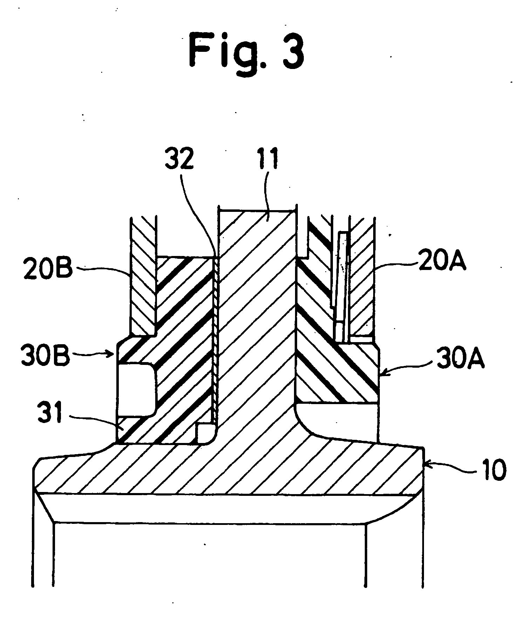

The thrust member 30 is formed by washer-type resin and disposed between respective contact faces of the clutch hub 10 and the side plate 20. As shown in Figs. 2 and 3, the thrust member 30 includes a first thrust member 30A disposed between the respective contact faces of the clutch hub 10 and the first side plate 20A and a second thrust member 30B disposed between the respective contact faces of the clutch hub 10 and the second side plate 20B.

The second thrust member 30B includes a base material portion 31 and a coating portion 32. The coating portion 32 is provided on the flange 11 side of the base material portion 31. The coating portion 32 is painted with a coating including soft metallic particle having smaller hardness than the clutch hub 10, and thermosetting resin. A thickness of the coating portion 32 is desirably between 15 µm and 35 µm.

The soft metallic particle is desirably composed of a combination of one or more of tin, silver, zinc, lead, bismuth, cadmium, and indium. The zinc is most preferable. Particle in scaly shape having 10 µm in size and 0.1 µm in thickness, for example, may be used for the soft metallic particle. In addition, phenol resin, urea resin, melamine resin, epoxy resin, unsaturated polyester resin, alkyd resin, polyurethane resin, and ebonite may be used for the thermosetting resin. The phenol resin is most preferable.

The coil spring 40 is disposed in the notch 12 and the window holes 21, facing to each other, formed on the clutch hub 10 and the side plates 20A and 20B respectively. Four coil springs 40 (or possibly two) are employed according to the present embodiment as shown in Fig. 1. Each coil spring 40 is received within the notch 12 and the window hole 21 while being supported by the pair of spring seats 41 and 42.

A radially inward portion of the cushion spring 50 is connected to a radially outward portion of the second side plate 20B as shown in Fig. 2. The cushion spring 50 and the second side plate 20B are connected to each other via rivet pins 80. A pair of friction elements 60 each having an annular shape are fixed to opposite sides of the cushion spring 50 in the axial direction via rivets 70. The pair of friction elements 60 are retained between an engine flywheel and a pressure plate (not shown). In addition, the clutch hub 10 is provided with a spline portion at an inner peripheral surface where an input shaft of a transmission (not shown) having a spline portion is engaged. The clutch desk 1 according to the present embodiment is employed in the clutch disk in an aforementioned manner.

An operation of the clutch desk 1 is explained referring to the attached drawings. As shown in Figs. 1 and 2, a driving torque (torsional torque) of an engine (not shown) is transmitted to the cushion spring 50 of the clutch disk via the friction elements 60. Then, the driving torque is transmitted to the side plate 20B connected to the cushion spring 50. The fluctuation of the driving torque added to the clutch disk is transmitted to the clutch hub 10 while the hysteresis of the driving torque is buffered and stabilized between the side plates 20A and 20B and the clutch hub 10 by a compression of the coil spring 40. The driving torque is then transmitted to an input shaft of a transmission (not shown).

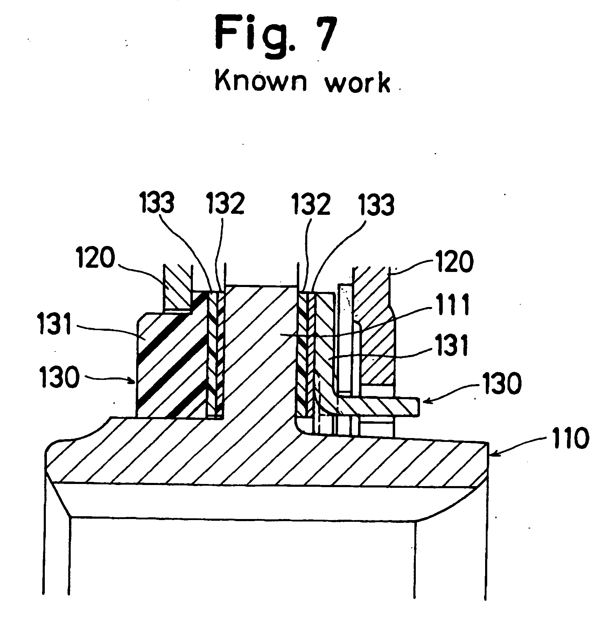

The hysteresis change along with the operating time of the thrust member 30 of the clutch desk 1 is explained referring to Fig. 4. Fig. 4 is a graph for comparing the hysteresis change along with the operating time of the thrust member 30 of the clutch desk 1. As an example, 1: the clutch desk 1 according to the present embodiment (See Fig. 3: the thrust member 30 whose face is painted with a coating including zinc particle and resin), 2: the clutch desk 1 according to a comparative example 1 (See Fig. 7: the thrust member 30 whose face is adhered to the friction member), and 3: the clutch desk 1 according to a comparative example 2 (the thrust member 30 whose face is not painted with a coating including zinc particle and resin) were prepared for measuring the hysteresis change along with the operating time of the thrust member. Structures of these three clutch desk 1 other than the thrust member 30 are substantially same as each other. The comparative example 2 showed a large hysteresis change. The comparative example 1 showed a less hysteresis change than the comparative example 2. The present embodiment showed the least hysteresis change, i.e. the hysteresis change was further stabilized.

According to the present embodiment as mentioned above, the number of parts or the production process may be reduced with the more stabilized hysteresis than the known clutch desk.

The principles, preferred embodiment and mode of operation of the present invention have been described in the foregoing specification. However, the invention which is intended to be protected is not to be construed as limited to the particular embodiment disclosed. Further, the embodiment described herein is to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A torsional damper apparatus (1) comprising:
a clutch hub (10) having a hub portion and a flange portion (11) extending in a radially outward direction from the hub portion;
a first side plate (20A) and a second side plate (20B) coaxially disposed on opposite sides of the clutch hub and relatively rotatable with the clutch hub; and
a first thrust member (30A) and a second thrust member (30B) retained between contact faces of the clutch hub and the first side plate, and contact faces of the clutch hub and the second side plate respectively; **characterized that**
at least one of the first thrust member (30A) and the second thrust member (30B) includes a base portion (31) and a coating layer (32) faces the flange portion (11) and including a metallic particle having a smaller hardness than the clutch hub and a thermosetting resin.

2. A torsional damper apparatus according to claim 1, wherein the metallic particle is composed of at least one of tin, silver, zinc, lead, bismuth, cadmium, and indium or any combination thereof.

3. A torsional damper apparatus according to any one of claims 1 and 2, wherein the thermosetting resin is composed of a phenol resin.

4. A torsional damper apparatus according to any one of claims 1 through 3, wherein the base portion is composed of a resin.
